(19) Europäisches Patentamt
European Patent Office
Office européen des brevets

(11) **EP 3 184 984 B1**

(12) **EUROPEAN PATENT SPECIFICATION**

(45) Date of publication and mention
of the grant of the patent:
**01.05.2019 Bulletin 2019/18**

(21) Application number: **15202081.4**

(22) Date of filing: **22.12.2015**

(51) Int Cl.:
**G01L 19/08** (2006.01)    **G01L 27/00** (2006.01)
**G01F 1/66** (2006.01)    **G01F 15/06** (2006.01)
**G01L 9/00** (2006.01)    **G01D 4/00** (2006.01)
**G01D 18/00** (2006.01)    **G01M 3/28** (2006.01)

(54) **A SYSTEM FOR CALIBRATING PRESSURE SENSORS IN A UTILITY NETWORK**

SYSTEM ZUR KALIBRIERUNG VON DRUCKSENSOREN IN EINEM VERSORGUNGSNETZWERK

SYSTÈME D'ÉTALONNAGE DE CAPTEURS DE PRESSION DANS UN RÉSEAU UTILITAIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**28.06.2017 Bulletin 2017/26**

(73) Proprietor: **Kamstrup A/S
8660 Skanderborg (DK)**

(72) Inventors:
• **Sørensen, Jens Lykke
DK-8330 Beder (DK)**
• **Laursen, Peter Schmidt
DK-8660 Skanderborg (DK)**
• **Nielsen, Søren Tønnes
DK-8355 Solbjerg (DK)**
• **Nielsen, Lars Hovgaard
DK-8362 Hørning (DK)**

(74) Representative: **Plougmann Vingtoft a/s
Strandvejen 70
2900 Hellerup (DK)**

(56) References cited:
**JP-A- 2012 245 207**    **US-A1- 2007 050 157**
**US-A1- 2011 215 945**

**Description**

FIELD OF THE INVENTION

The present invention relates to a utility network with a plurality of consumer sites with consumption meters for measuring consumption data of a supplied utility, and with pressure sensors for measuring the pressure of the utility. In particular, the invention relates to a system for calibrating the pressure sensors of the utility network.

BACKGROUND OF THE INVENTION

Consumption meters may be used for measuring utility usage in connection with supply of the utility, *e.g.* of water, heating, or cooling, and may in turn be used in connection with charging of the consumed quantity.

By way of measuring principle, consumption meters may be based on ultrasonic flow measurement and include an ultrasonic flow meter part. Thus an ultrasonic flow meter may be a transit time flow meter arranged to measure the flow rate of a fluid flowing in a flow channel of the meter by way of known operation principles for transit time flow meters.

Beyond the flow rate, other parameters may be of interest to the operator of a utility network as well. Thus with consumption meters relating to utilities like water, heating and cooling, the meters may comprise one or more temperature sensors to measure the temperature of the supplied fluid, either for billing purposes as with heating and cooling supplies, or for survey purposes as with water supply.

The fluid pressure in the utility supply line is another parameter of interest to the operator of the utility network, and pressure sensors are applied with the network to monitor this important parameter.

Thus, in distribution networks such as for potable water, for hot water for district heating or for cold water for cooling, it is important to be able to quickly detect pressure anomalies in the daily performance of the network. For instance, a leaking pipe in a water distribution network may cause the loss of hundreds or even thousands of cubic feet of clean, potable water, while the pressure in the network may drop to inapplicable levels. Also a valve in a distribution network, which does not fully open or close as intended, may require pressure pumps to be operated at higher pressures and in turn increased power and cost and wear to the network tubes.

Also the fluid pressure at the consumer sites, *i.e.* at the network endpoints should be properly controlled and maintained. Thus the fluid pressure of potable water at consumer sites should be sufficiently high to allow proper tapping by the consumer, however, not too high to cause excessive wear of the pipeline tubing, as well as of valves, filters, meters and faucets at the consumer site.

Hence there is a need to the utility distributor, and eventually to the consumer, to properly control the fluid pressure of the utility in the network.

Controlling the fluid pressure in the utility network requires the provision of reliable, up-to-date data of the actual pressure in the network, *i.e.* the provision of reliable and up-to-date data on the fluid pressure status at selected sites in the network, preferably at numerous sites in the network.

Typically, in the absence of such data, the fluid pressure in the network is controlled only to the level of maintaining the fluid pressure sufficiently high to allow proper tapping at all consumer sites without any risk of bursting constituents of the network. Patent document JP2012245207 discloses a system and method for calibrating pressure sensors used to monitor water pressures in a fire sprinkler system of a large building. A master pressure sensor is used as reference to calibrate all other sensors against. Known differences in the elevation of the pressure sensors located over different floors of the building with respect to the master pressure sensor are used to correct the calibration data.

SUMMARY OF THE INVENTION

Accordingly it would be advantageous to achieve a system to fulfil the above need. In general, the invention preferably seeks to mitigate, alleviate or eliminate one or more of the above mentioned disadvantages of the prior art.

Accordingly, in a first aspect of the invention there is provided a system for calibrating consumption-meter-integrated pressure sensors in a utility network, according to claim 1.

The system according to the invention comprises a plurality of consumer sites, each consumer site comprising a consumption meter which comprises a pressure sensor.

In the context of the present invention, a "consumer site" should be understood as a site at a consumer's premises which defines a site subject to separate billing of the supplied utility, and which is in turn equipped with a separate consumption meter for providing data relating to the consumption of the utility for such billing purposes. Also it should be understood that the consumer site is defined in terms of a unique geographical position, such as provided by a geographical information system.

Eventually it should be understood that whereas the consumer site physically may comprise more geographical positions from the geographical information system, the one unique geographical position assigned to the consumer site uniquely defines the consumer site.

At each consumer site, the consumption meter measures the flow rate of the utility. Such measurement may be conducted by ultrasonic flow measurement principles, such as by operation principles for transit time flow meters, where ultrasonic signals are emitted at one transducer and received at the other transducer, and where the difference in time-of-arrival between oppositely propagating signals is measured and converted into a flow rate.

Also at each consumer site, a pressure sensor measures the fluid pressure of the utility, such as by known mechanical, electromechanical, electrical or optical principles.

The consumer sites being equipped with consumption meters which comprise pressure sensors allows for the advantageous provision of simultaneous or near-simultaneous sets of data of fluid flow rate and fluid pressure, such sets of data relating flow and pressure providing valuable information on the hydraulic conditions of the utility network at the consumer sites.

The consumption meters of the system according to the invention further comprise communication means for communicating data representing the flow rate, such as by transmitting such data to a data collector of the system for further processing and analysis, and eventually for billing purposes. One means for such transmission is wireless radio frequency communication means such as according to the branch of the M-BUS protocol relating to wireless transmission of consumption data according to European Standard EN 13757.

Also the pressure sensors of the system according to the invention comprise communication means for communicating data representing the fluid pressure, such as by transmitting such data to the data collector of the system for further processing and analysis. As with the flow rate data, the transmission of pressure-related data is performed by wireless radio frequency communication means.

According to the invention the communication means of the pressure sensors are further arranged to receive calibration data, such as from the data collector, for calibration of the pressure sensors by means of their calibration means. Accordingly, the communication means of the pressure sensor is two-way communication means, being able to transmit pressure data as well as to receive calibration data.

The data reception facility of the communication means of the pressure sensors combined with their calibration means allows for their calibration and in turn for their capability of delivering reliable pressure data. According to the invention the calibration may be done continuously, near-continuously or at intervals, which in turn may be predetermined. Calibration may as well be triggered by events with the utility networks, such as shut-downs or installation of new consumption meters or pressure sensors.

The system according to the invention further comprises first registration means for registration of the elevation at each consumer site. The first registration means also communicates data representing such consumer site elevation, such as providing such data for the data collector of the system for further processing and analysis.

Thus, in the context of the present invention, "registration means" should be understood as means to register and communicate, such as to read or record, and such as to transmit the subject elevation data to the data collector. According to the invention the registration and communication may range from manually making notes of the elevation level at the consumer site and providing it for the data collector, such as by typing it into the data collector, to automatically transmitting such data to the data collector, such as by GSM smart phone technology or wireless radio frequency communication means.

Also in the context of the present invention "elevation at each consumer site" should be understood as the geometric height of the consumer site over the Earth's sea level. For clarity, "elevation" should be distinguished from "altitude", which refers to the height over a surface, such as the height of an aircraft in flight over the ground surface.

The system of the present invention further comprises a reference pressure sensor arranged at a reference site in the utility network.

Like the above pressure sensors at consumer sites, the reference pressure sensor is arranged to measure the fluid pressure in the utility network. The reference pressure sensor is arranged at a reference site in the utility network, the reference site being a designated site in the utility network to be referenced to by other sites of the utility network, such as by the consumer sites.

Also like the pressure sensors at consumer sites, the reference pressure sensor has communication means for communicating data representing the fluid pressure at the reference site, such a by providing such data to the data collector of the system for further processing and analysis. Unlike the consumer site pressure sensors, the communication means of the reference pressure sensor may be two-ways communication means or one-way communication means, as the reference pressure sensor may or may not, respectively, be capable of receiving data.

Additionally the system according to the invention comprises second registration means for registration of the elevation at the reference site. Also these second registration means communicate data representing such reference site elevation, such a by providing such data to the data collector of the system for further processing and analysis. As above, these registration means are means to register and communicate, such as to read or record, and such as to transmit the subject elevation data relating to the reference site to the data collector.

Another element of the system is the data collector arranged to receive data from each of the consumption meters, each of the pressure sensors, the reference pressure sensor as well as from the first and second registrations means.

Thus, from the consumption meters, the data collector receives all of the above data representing the flow rate at each consumer site. From the pressure sensors, the data collector receives all of the above data representing the fluid pressure at each consumer site. The data collector also receives the above data representing the fluid pressure at the reference site, which in turn is transmitted from the reference pressure sensor. Eventually the data collector receives all of the above data presenting consumer site elevations from the first registration means, and the data representing the reference site elevation from the second registration means.

All of these data received by the data collector are transferred to a computing unit connected to the data collector for further processing. Following such processing as described below, the data collector receives calibration data derived from the said data from the computing unit for communication to each of the pressure sensors for their calibration.

The further data processing at the computing unit comprises the calculation of the elevation difference between the reference site and the consumer site, as well as the estimation of the fluid pressure at the consumer site from the fluid pressure at the reference site and the so-calculated elevation difference for the respective consumer site. Eventually calibration data for calibration of the pressure sensor based on the so-estimated fluid pressure are provided to the data collector.

In the context of the present invention it should be understood that "pressure" is defined as the force applied perpendicular to the surface of an object per unit area over which the force is applied. The pressure is a scalar and has no direction: if the surface of the above object is changed, the normal force is changed accordingly, however, the pressure remains unchanged.

The fluid pressure is the pressure at some point within the fluid.

In the context of the present invention the pressure sensors are calibration based on the estimated fluid pressure at the consumer site.

In the context of the present invention the "fluid pressure" may be the pressure difference between the respective consumer site and the reference site, *i.e.* the fluid pressure at the consumer site relative to the fluid pressure at the reference site.

Also in the context of the present invention the "fluid pressure" may be the absolute fluid pressure of the fluid, *i.e.* relative to a fluid pressure of zero. The absolute fluid pressure may in turn include or exclude the atmospheric pressure.

Eventually in the context of the present invention the "fluid pressure" may comprise a first partial derivative of either of the above pressure difference or the above absolute pressure with respect to the reference pressure.

In the context of the present invention three approaches as to the dynamics of the fluid in the utility network are considered:

Thus, in a first approach the fluid is considered to be static.

With the static approach the fluid is considered to be static, *i.e.* not moving at all or with any movement being negligible. In such case the fluid pressure at any given point is the static pressure of the non-moving fluid, the so-called hydrostatic pressure.

Bernoulli's equation (1) expresses the relation between pressure, movement and elevation of a fluid:

$$p/\gamma + v^2/2g + z = \text{constant (1)},$$

where:

p is the pressure of the fluid, measured in $N/m^2$;
$\gamma$ is the specific weight of the fluid, defined as the product of the fluid density and the acceleration of gravity and measured in $N/m^3$;
v is the velocity of the fluid, measured in m/s;
g is the acceleration of gravity, measured in $m/s^2$; and
z is the elevation, measured in m,

under the assumptions that the fluid is incompressible and that no viscous forces in terms friction or other resistances to flow of the fluid exist.

In the static approach, the Bernoulli's equation reduces to:

$$p/\gamma + z = \text{constant (2)}$$

Thus, in a first "static" approach (and ignoring any variation of the fluid specific weight $\gamma$, such as variation with temperature) the pressure depends on the elevation only. Thus, according to this approach the fluid pressure at a site may be determined from the elevation at the specific site.

In a second approach, which is a dynamic approach, the fluid movement is taken into account, however, in an "ideal" perspective. Thus with this approach the fluid is considered "ideal", i.e. with no viscosity, so that any viscous forces involved with the fluid movement are disregarded. In this case the "full" Bernoulli's equation (1) applies.

Eventually, in the third approach, which is another dynamic approach, viscous forces involved with the fluid movement are considered as well. Viscous forces involved with the fluid flow induce a pressure drop $\Delta$p which is related to the square of the fluid velocity via a scaling factor referred to as a "hydraulic coefficient" k:

$$\Delta p/\gamma = k \, v^2/2g \ (3)$$

In such case an "extended" Bernoulli's equation applies:

$$p_A/\gamma + v_A^2/2g + z_A = p_B/\gamma + v_B^2/2g + z_B + k \, v^2/2g \ (4),$$

A denoting an upstream site relative to a downstream site B.

All of these three approaches according to the invention involve the elevation difference between the reference site and the consumer site. This elevation difference, $\Delta$ elevation, is calculated as the elevation at the consumer site subtracted from the elevation at the reference site:

$$\Delta \text{ elevation (consumer site)} = \text{elevation (reference site)} - \text{elevation (consumer site)} \ (5)$$

As to the elevation at the consumer and reference sites, data may be provided in a number of ways: A smart phone application for geotagging the position of the site may be applied, either in terms of registration of site longitude and latitude and a subsequent looking-up of the site elevation in a geographic information system or a service derived therefrom, such as Google Maps, or in terms of a simultaneous registration with the application of site longitude, latitude and elevation.

Further to this, the elevation level may vary over the area of the consumer site and/or reference site as defined above. In such case an elevation level may be registered for the site which does not properly mirror the actual elevation at the position of the pressure sensor at the site. According to the invention, to correct for such inaccuracies, a manual correction may be made to an otherwise automatically generated elevation level.

Further with the invention the fluid pressure at the consumer site is estimated from the fluid pressure at the reference site and the said elevation difference. According to the invention the fluid pressure at the consumer site $p_{estimate}$ is estimated as the sum of the fluid pressure at the reference site and the elevation difference, the latter being scaled with the specific weight of the fluid, $\gamma$:

$$p_{estimate} \text{ (consumer site)} = p \text{ (reference site)} + \Delta \text{ elevation (consumer site)} * \gamma \ (6)$$

According to the invention calibration data related to the estimated fluid pressure at the consumer site are eventually communicated via the data collector to the pressure sensors for their calibration.

In the context of the present invention, the term "calibration data" should be understood as data constituting information related to the estimated fluid pressure at the consumer site, and relative to which the pressure sensor is calibrated. Accordingly, calibration data may comprise the estimated fluid pressure at the consumer site *per se*, or it may comprise data related to or derived from the estimated fluid pressure at the consumer site.

According to the invention the pressure sensor at the consumer site is, upon receipt of the calibration data from the data collector, arranged to run a calibration procedure, according to which the pressure sensor is calibrated to the estimated fluid pressure.

As described above, the fluid pressure may comprise the pressure difference between the respective consumer site and the reference site, the absolute fluid pressure of the fluid, and/or it may comprise a first partial derivative of either of the pressure difference or the absolute pressure with respect to the reference pressure. Additionally or alternatively, the fluid pressure for pressure sensor calibration may comprise a plurality of estimated pressures, such as two, three, four or five estimated pressures obtained at a similar number of reference pressures.

According to the invention the calibration of the pressure sensor at the consumer site involves that the pressure sensor is adjusted to output a fluid pressure indication, *i.e.* a fluid pressure reading of the pressure sensor, corresponding to the estimated fluid pressure. Thus, upon calibration a new fluid pressure indication scheme is provided in accordance with the estimated fluid pressure. With the calibration, the new fluid pressure indication scheme substitutes any previous fluid pressure indication scheme, and the new fluid pressure indication scheme is applied until any further calibration.

According to the invention the calibration should be performed according to a procedure which eliminates inaccuracies originating from any fluid pressure fluctuations between the time of reference pressure measurement and the time of pressure sensor calibration. This may be accomplished in a number of ways:

- The time interval between the reference pressure measurement and the pressure sensor calibration may be minimized to eliminate any significant fluid pressure fluctuations during the time interval;

- The reference pressure measurement and subsequent calibration may be performed during periods of static network conditions;

- The measurement and subsequent calibration may be performed during periods of little fluid pressure fluctuation, such as during night time, or during holidays/vacation periods;

- Simultaneous measurement of reference site pressure and consumer site pressures may be applied, such as "snapshotting" of reference site pressure and consumer site pressures. In such case the calibration adjustment may be made to the so-measured consumer site pressure, and not to the actual consumer site pressure at the time of calibration.

Also provision of pressure data for calibration may be made in a number of ways:

- Pressure data may be based on long-term and/or averaged observations, such as between individual pressure sensors in an otherwise homogeneous group of pressure sensors. One pressure sensor of such group displaying indications which consistently deviate from the indications of the other group member may be may be adjusted to be aligned with the other group members;

- Pressure data may be based on series of measurements, such as at varying pressure, flow or temperature, and being derived from mathematical or statistical analysis of the measurement data, such as by linear regression analysis.

As shown above the estimation of the fluid pressure at the consumer site involves the specific weight of the fluid. According to the invention variations in the specific weight, such as variations with temperature, may be taken into account with the fluid pressure estimation. Per example, the density of water varies by as much as 4% in the temperature range 0-100 °C, the density at 100 °C being 4% less than the average density in the temperature range 0-30 °C, and may advantageously be taken into account with the fluid pressure estimation.

According to one aspect of the invention the pressure sensor is integrated with the consumption meter, and the first communication means comprises the second communication means.

According to this embodiment the pressure sensor is integrated with the consumption meters, such as being integrated with a flow tube of the consumption meter. Such integration provides for an elegant way of arranging the pressure sensing facility with the consumption meter. Also it allows for integrated control of the flow rate measurement and the fluid pressure measurement, such as by applying a common control circuit for the two types of measurements.

Similar advantages apply to the first communication means comprising the second communications means, *i.e.* that flow rate data and fluid pressure data are communicated to the data collector by common communication means, such as being communicated in a common data package by common communication means.

In an example not forming part of the invention the pressure sensor is arranged in a housing, which is separate from the consumption meter.

According to this example the consumption meter and the pressure sensor are arranged in separate housings at the consumer site. Such arrangement allows for design freedom in terms of positioning of the meter and the sensor with the network within the consumer site. Per example, with this embodiment, the pressure sensor may be arranged at the pressure-wise most critical position within the consumer site, such as adjacent to a stop valve or the like, independently of the positioning of the consumption meter.

According to an embodiment of the invention the consumption meter comprises a flow tube and the pressure sensor is arranged with the flow tube for sensoring deformations of the flow tube.

Thus one way of measuring the fluid pressure is by sensoring deformations of a consumption meter flow tube through which the fluid flows, and which deforms upon pressure variations. Such way of measuring the fluid pressure allow for an elegant and simple way of monitoring the fluid pressure.

According to an embodiment of the invention the pressure sensor comprises a strain gauge arranged at an outer surface of the flow tube of the consumption meter. Such strain gauge pressure sensor is capable of measuring deformations of the consumption meter flow tube in response to fluid pressure variations.

In the context of the present invention "a strain gauge" should be understood as a device to be used to measure strain on an object according to the principle of that, as the object and in turn the strain gauge arranged thereon are deformed, the electrical resistance of the strain gauge changes. Typically strain gauges consist of a thin layer of patterned metallic foil with narrow lines connected in series and supported on an insulating flexible backing of polymer, the strain gauge being more sensitive to strain in one direction than in other directions, and being arranged on the object to measure strain in the direction of highest sensitivity. The strain gauge may, however, have any structure fulfilling the above principle.

According to the invention the strain gauge is arranged at the outer surface of the flow tube. Being adhered to the outer surface of the flow tube, the strain gauge will deform upon any deformation of the flow tube as caused by fluid pressure variations. Thus, upon applying a pressure to the flow tube by means of the pressure of the fluid flowing therein, the flow tube may deform, causing the strain gauge thereon to deform as well. Upon deformation, *i.e.* on *e.g.* stretching of the lines of strain gauge, their resistance increases, which in turn may be measured e.g. with a Wheatstone bridge.

Strain gauges provide a simple, easy-to-apply and cost efficient pressure sensor, which may be applied directly on the flow tube of the consumption meter to measure pressure-induced deformations of the flow tube.

Pressure-induced deformation, however, is not the only type of deformations observed with a flow tube: thermally induced deformations are observed as well. In order to minimize the compensation for any thermal effect, the strain gauge may preferably have a temperature characteristic which is matched to compensate the thermal expansion coefficient of the flow tube.

Thus strain gauges are available with different temperature characteristics so that the temperature effects on the resistance of the strain gauge *per se* may cancel out the resistance change of the strain gauge due to the thermal expansion of the object on which the strain gauge is arranged. Thus strain gauges from various alloys like constantan alloys exist which have a temperature dependency of their resistances which are matched to materials of different thermal expansion like stainless steel, copper, brass etc.

According to the invention the flow tube of the consumption meter may be made from a metal, such as from stainless steel, galvanized steel, copper, brass or red brass, and the strain gauge may have a thermal characteristic adapted hereto.

Alternatively, according to the invention the flow tube of the consumption meter may be made from a polymer such as from polyphenylene sulphide (PPS), polyether sulphone (PES), polysulphone (PSU), polystyrene (PS) or polyamide (PA), and the strain gauge may have a thermal characteristic adapted hereto.

Moreover, the polymeric flow tube of a consumption meter may be made from a composite material comprising a filler, such as carbon, such as carbon fibres, metal, such as metal powder, glass, glass fibres or the like to adjust the properties of the polymer, and in turn of the flow tube.

Polymer and composite flow tubes are usually more deformable than are *e.g.* metallic flow tubes. Accordingly, applying strain gauges with composite flow tubes provides higher relative sensitivity of the strain gauge as compared to their application with metallic flow tubes, and in turn more precise measures of the pressure and any variations thereof.

While being elastic in the short term, however, composite flow tubes are plastic in the long term; thus whereas they are reversibly deformable in the short term, they tend to undergo permanent deformation under long term load. Thus long term exposure to the pressure of the fluid flowing in the flow tube tends to gradually deform polymeric and composite flow tubes. Accordingly a pressure sensor arranged on the flow tube, such as a strain gauge arranged on the surface of the flow tube, is exposed to gradually increasing deformation. In view of the strain gauge, such deformation corresponds to a change of pressure, even though the pressure of the fluid in the tube is in fact constant: consequently the pressure sensor is no longer properly calibrated to the actual pressure level, *i.e.* it is out of calibration and needs renewed calibration.

The system of the subject invention is particular advantageous as it allow fast and simple calibration of pressure sensors like strain gauges applied with polymeric and composite meter tubing.

In alternative embodiments of the invention the pressure sensor comprises an optical sensor or a capacitive sensor. As with the strain gauge-type pressure sensor, such sensors are mechanically biased upon long term deformation, and may need renewed calibration.

According to an embodiment of the invention the second communication means comprises the first registration means.

Thus the registration means for registration and communication of data relating to the elevation at the consumer site may be integrated with the pressure sensor communication means at the consumer site. Accordingly, data relating to the elevation may be communicated along with the pressure data, such as elevation data being communicated with the first pressure data transmitted from the pressure sensor after installation or exchange of the sensor, or at predetermined intervals.

Alternatively the first communication means comprises the first registration means.

Thus the registration means for registration and communication of data relating to the elevation at the consumer site may be integrated with the consumption meter communication means at the consumer site. Accordingly, data relating to the elevation may be communicated along with the flow rate data, such as elevation data being communicated with the first flow rate data transmitted from the pressure sensor after installation or exchange of the pressure sensor, or at predetermined intervals.

Alternatively the first registration means has separate communication means. Thus, the communication means of the first registration means may *e.g.* comprise a smart phone application for geotagging the position of the consumer site during installation or exchange of the consumption meter and/or the pressure sensor, either in terms of registration of consumer site longitude and latitude and a subsequent looking-up of the consumer site elevation in a geographic information system or a service derived therefrom, such as Google Maps, or in terms of a simultaneous registration of consumer site longitude, latitude and elevation, such a by means of a smart phone application.

Accordingly, the communication means of the first registration means may be two-ways wireless communication means, such as for receiving full geographical information data (longitude, latitude, elevation) from a geographical information system and for wirelessly transmitting such data to the data collector for further processing, or it may be one-way wireless communication means, such as for receiving partial geographical information data (longitude, latitude, however, not elevation) from a geographical information system and for cabled communication of such data to the data collector for further processing in terms of looking-up the relevant elevation data.

The registration means may further be linked to an operator's proprietary mapping facility such as a mapping facility of the utility network, so that whenever a newly installed or exchanged consumption meter or pressure sensor is registered, such meter or sensor is added to the utility network map in terms of its longitude, latitude and elevations data.

As described above under the first static approach, pressure data may be static pressure data, referred to as hydrostatic pressure data, *i.e.* pressure data as observed with no or negligible flow of the fluid in the utility network.

Thus, according to the invention the fluid pressure at the reference site is measured under such non-flow conditions in the utility network. In such case there will be not pressure drops in the utility network as otherwise caused by fluid flow.

Accordingly, in terms of relating flow data and pressure data, the computing unit is further arranged to group data sets of simultaneous data representing the fluid pressure at the reference site and flow rates at each of the consumer sites, identify from such data sets a non-flow data set of non-flow at each of the consumer sites, and apply the fluid pressure at the reference site of such non-flow data set for estimating the fluid pressure at the consumer site.

Pressure data relating to static conditions may prove more reliable than pressure data relating to dynamic conditions. Such static data is provided from grouping of simultaneous data for the entire utility network or for a part of the utility network considered and a non-flow data set identified therefrom, *i.e.* a data set with no flow at any of the consumer sites of the utility network or the part thereof considered. Such non-flow data sets are typically observed during nighttime in residential areas and during weekends or holiday/vacation periods in industrial areas with little use of the utility.

Having identified such non-flow data set, the fluid pressure at the reference site of such data set is used for precisely estimating the fluid pressure at the consumer sites.

Whereas the elevation difference between the consumer site and the reference site is used as a parameter for estimating the fluid pressure at the consumer site from the pressure at the reference site, *i.e.* in the static approach, other parameters of the utility network may be taken into consideration as well.

Thus according to the above second approach, which is a dynamic approach, the movement of the fluid in the utility network according to the Bernoulli's equation (1) is taken into account as well. Accordingly, relating simultaneous data of the flow rate at the consumer site, the reference pressure as well as data on the elevation difference between the consumer site and the reference site, allows for estimating the fluid pressure at the consumer site even under dynamic conditions.

It should be understood, that according to this second approach, the fluid is considered as "ideal", *i.e.* having zero viscosity, so that no viscous forces involved with the fluid movement exist.

Eventually, in the third approach, which is another dynamic approach, viscous forces involved with the fluid movement are taken into account as well.

In this context, viscous forces comprises any frictional forces involved with the movement of the fluid, which in turn comprise intra-fluid frictional forces between "elements" of the fluid as well as extra-fluid frictional forces between the fluid and the tubing elements, such as tubing wall roughness or valves or filters arranged with the tubing.

According to this approach, viscous forces involved with the fluid flow induce a pressure drops $\Delta p$ which relates to the square of the fluid velocity.

Thus, according to this embodiment of the invention, the estimation of the fluid pressure at the consumer site is further made from a parameter selected from the group of network pipe parameters comprising pipe shape, such as pipe dimensions, such as pipe length and pipe diameter, pipe bends, and pipe inner surface roughness, and pipe constituents such as valves, filters, and meters for a piece of pipe of the utility network between the reference site and the consumer site, and the fluid viscosity.

Under dynamic conditions all of these parameters contribute to the pressure drop in the utility network. Thus, like with the pressure drop related to the flow of the "ideal" fluid, the pressure drops related to each of these parameters at the given flow rate may be taken into when estimating the pressure at the consumer site. This allows for elimination of inaccuracies otherwise involved with the estimation.

It is preferred that the plurality of consumer sites covers 10% or more of all consumer sites in the utility network, such a more than 20%, such as more than 30%, such as more than 40%, such as more than 50% of all consumer sites in the utility network. Whereas all consumer sites in the utility network comprise a consumption meter, all of the consumer sites need not comprise a pressure sensor. Of course, more consumer sites being equipped with pressure sensors to provide fluid pressure data means a more sensitive monitoring system, however, even by having pressure sensors with 10% of the consumer sites provides valuable information on the pressure conditions of the utility network.

According to an embodiment of the invention a pressure sensor which is calibrated according to the invention may be used for calibrating additional sensors.

Thus according to the invention the computing unit may be further arranged to calculate the elevation difference between the consumer site and an additional consumer site, an additional pressure sensor being arranged at the additional consumer site, estimate the fluid pressure at the additional consumer site from the fluid pressure at the consumer site and the elevation difference between the consumer site and the additional consumer site, and provide calibration data to the data collector for calibration of the additional pressure sensor based on such estimated fluid pressure for the additional pressure sensor.

The calibration of such additional pressure sensors is done based on a similar concept as the calibration of a pressure sensor relative to the pressure of the reference site pressure sensor. With this embodiment of the invention the calibrated pressure sensor acts as a pseudo reference pressure sensor, providing the basis for calibration of the additional pressure sensor.

Thus with the calibration of additional pressure sensors the elevation difference between the consumer site and the additional consumer site is calculated, and the pressure at the additional consumer site is estimated from such elevation difference and the pressure at the consumer site.

Such calibration of additional pressure sensors may be advantageous in the absence of reliable data from the reference pressure sensor, such as in case of a temporary absence of reliable data from the reference pressure sensor.

According to an embodiment of the invention the system is arranged for estimating a hydraulic coefficient for the utility network as well.

Thus according to the invention the computing unit is further arranged to estimate a hydraulic coefficient for a part of the utility network between a first consumer site and a second consumer site selected from the plurality of consumer sites, from the fluid pressure obtained from the pressure sensor at the first consumer site and from the fluid pressure obtained from the pressure sensor at the second consumer site.

In the context of the present invention the term "hydraulic coefficient" should be understood as the coefficient relating the pressure drop over a part of the network between two sites in the network, optionally corrected for the specific weight of the utility, and the flow of the utility therebetween, optionally corrected for the acceleration of gravity.

The hydraulic coefficient for the part of the network between the first and the second consumer site mirrors the sum of all frictional resistances to flow between the two sites. Thus, with the hydraulic coefficient any such frictional or viscous forces in the network part are considered, which relate to resistance to the flow originating from network pipe (network) parameters such as pipe shape, such as pipe dimensions, such as pipe length and pipe diameter, pipe bends, and pipe inner surface roughness, and pipe (network) constituents such as valves, filters, and meters for a piece of pipe of the utility network between the reference site and the consumer site, and the fluid viscosity.

According to this embodiment of the invention, pressures obtained at two consumer sites defining a part of the utility network are used for the estimation of the hydraulic coefficient for the part of the utility network between the two consumer sites.

According to this embodiment it should be understood that the pressures obtained at two consumer sites are pressure as obtained with pressure sensors which have been calibrated with the system of the present invention, and which are therefore reliable pressure data for the precise estimation of the said hydraulic coefficient.

Thus with the invention it is possible to obtain pressure data from calibrated pressure sensors for the estimation of hydraulic coefficients. The advantages herewith are at least two-fold: Numerous calibrated pressure sensors are available in the utility network, allowing a precise mapping of the utility network in terms of hydraulic coefficients for each part of the network, and even for overlapping part of the network, and in turn for the entire network. Also the elegant and simple way of calibration according to the invention, which enables frequent calibration, allows for frequent update of the hydraulic coefficients and in turn up-to-date mirroring of the network hydraulics.

Once the hydraulic coefficient for the subject part of the utility network is estimated, it may be used with the control of the network and the pressure thereof, modeling precisely the network conditions and operation.

In a preferred embodiment of the invention the computing unit is further arranged to estimate the hydraulic coefficient for the part of the utility network between the first consumer site and the second consumer site from simultaneous values of the fluid pressure at the first consumer site and a first flow rate obtained from a first consumption meter at the first consumer site, and simultaneous values of the fluid pressure at the second consumer site and a flow rate obtained from a second consumption meter at the second consumer site.

With this embodiment of the invention, advantage is taken of the system comprising a plurality of consumer sites each equipped with flow rate and calibrated fluid pressure measurement facilities for the provision of simultaneous flow rate and fluid pressure data. Such system provides advantages in terms of a precise data mapping of flow and pressure conditions of the network, and in turn of a proper data base for estimation of hydraulic coefficients.

The so-estimated hydraulic coefficients may form the basis for the development of a complete hydraulic model for entire utility network. Thus, sets of simultaneously determined hydraulic coefficients may be combined - and obviously refined by known statistical analytical means such as least square fitting - to map the entire network in terms of a complete hydraulic model.

According to a second aspect of the invention a method of calibrating pressure sensors in a utility network with a plurality of consumer sites is provided, according to claim 10.

Similar considerations as with the system of the first aspect of the invention apply to this second aspect of the invention.

In general the various aspects of the invention may be combined and coupled in any way possible within the scope of the invention. These and other aspects, features and/or advantages of the invention will be apparent from and elucidated with reference to the embodiments described hereinafter.

BRIEF DESCRIPTION OF THE DRAWINGS

Embodiments of the invention will be described, by way of example only, with reference to the drawings, in which:

Fig. 1 shows a flow diagram of the system according to the invention;

Fig. 2 shows the principle of estimation of the fluid pressure at a consumer site according to the invention; and

Fig. 3 shows a schematic of a strain gauge pressure sensor applied with the system of the invention.

DESCRIPTION OF EMBODIMENTS

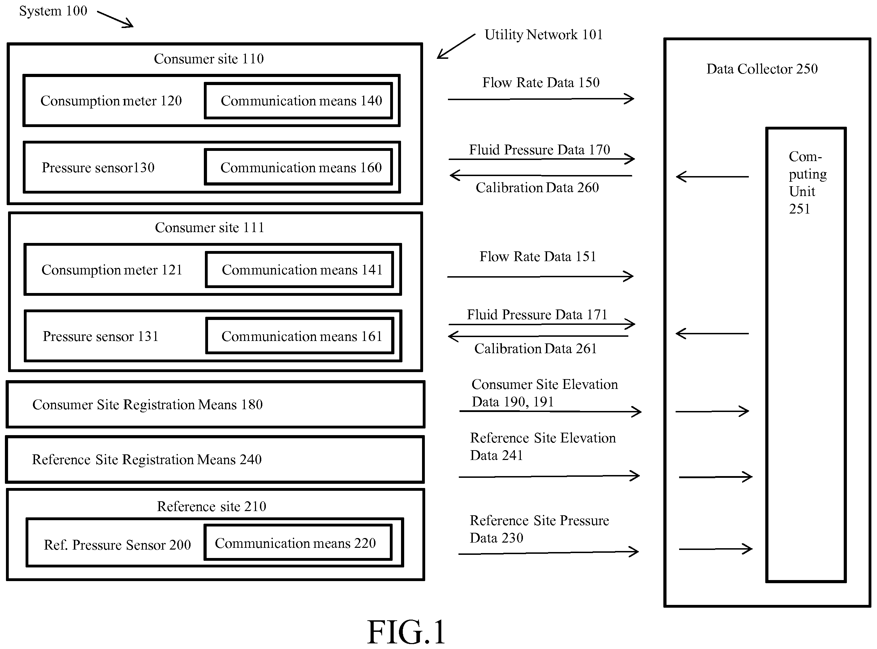

An embodiment of the invention is illustrated in Fig 1, which shows a flow diagram of the system according to the invention.

The system 100 comprises a plurality of consumer sites 110, 111 with the utility network 101, each comprising a consumption meter 120, 121, respectively, and a pressure sensor 130, 131, respectively.

Each of the consumption meters 120, 121 have communication means 140, 141, respectively, for communicating data 150, 151, respectively, relating to the flow rate at the consumer sites 110, 111, respectively, to a data collector 250.

Likewise, each of the pressure sensors 130, 131 have communication means 160, 161, respectively, for communicating data 170, 171, respectively, relating to the fluid pressure at the consumer sites 110, 111, respectively, to the data collector 250. The pressure sensors 130, 131 have calibration means as well (not shown).

The system 100 further comprises registration means 180 for registration of the elevation level at the consumer sites 110, 111. With the registration means 180 data relating to the elevation level 190, 191 at the consumer sites 110, 111, respectively, are communicated to the data collector 250 as well.

Also the system 100 comprises a reference pressure sensor 200, arranged at a reference site 210 with the utility network 101, and having communication means 220.

The system 100 further comprises registration means 230 for registration of the elevation at the reference site 210. With the registration means 240 data 241 relating to the elevation level at the reference site 210 are communicated to the data collector 250 as well.

A computing unit 251 is connected to the data collector 250.

The computing unit 251 calculates the elevation difference between the reference site 210 and each consumer site 110, 111, and estimates the fluid pressure at each consumer site 110, 111 from the elevation difference and fluid pressure data 170, 171, respectively.

Based on such fluid pressure estimates, calibration data 260, 261 for the pressure sensor 130, 131, respectively, are provided for the data collector 250 for further communication to the pressure sensors 130, 131 for their calibration.

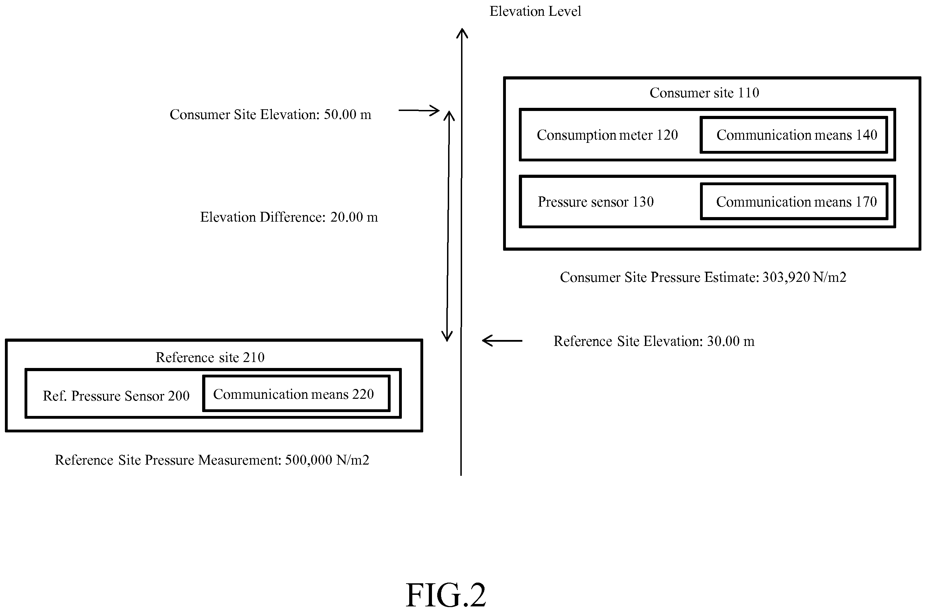

Fig. 2 illustrates the estimation of the fluid pressure at the consumer site 110, which estimate is used for the calibration of the pressure sensor 130.

The fluid pressure estimate involves two components: The pressure at the reference site 210 as measured by the reference site pressure sensor 230, and the elevation difference between the elevation at the reference site 130 and the elevation at the consumer site 110.

With Fig. 2 is illustrated a case with a pressure at the reference site of 500,000 N/m$^2$, *i.e.* 5 bar or 4.935 atm. Further with Fig. 2 the elevation level at the reference site 130 is 30.00 m, and the elevation level at consumer site 110 is 50.00 m. The specific weight of the fluid, water, is 9,804 N/m$^3$ at 10 °C.

The above elevation data are provided from look-ups in Google Maps, based on registration of the longitude and latitude at the reference site 130 and the consumer site 110, respectively.

According to the invention, eq. (6), the fluid pressure at the consumer site 110 is estimated to:

$$P_{estimate} (\text{consumer site } 110) = 500,000 \text{ N/m}^2 + (30 \text{ m} - 50 \text{ m}) * 9,804 \text{ N/m}^3 = 303,920 \text{ N/m}^2,$$

corresponding to 2.999 atm.

Following such estimation, this piece of information is communicated to the pressure sensor 130 at the consumer site 110 for its calibration thereto. Accordingly the indication of the pressure sensor 130 is calibrated to 303,920N/m$^2$ in substitution of any previous pressure indications of the pressure sensor 130, and under the assumption, that the fluid pressure at the consumer site 110 is unchanged since the fluid pressure measurement at the reference site 210.

With the calibration according to the embodiment of Fig. 2 the fluid pressure measurement at the reference site 210, the fluid pressure estimation at the computing unit 251 and the calibration is done within a time interval sufficiently short to eliminate any fluid pressure variation at the consumer site 110. Thus with appropriate communication means, such as "ready-for-communication" GSM means or wireless radio frequency communication means, these steps are performed within a time interval in the ms-range or the s-range.

Further to this embodiment of the invention the above steps are performed during a period of static network conditions, *i.e.* during a period of non-flow conditions in the network.

According to this embodiment, the reference site fluid pressure and the flow rates at the relevant consumer sites are recorded simultaneously and every 120s:

Table 1

| Time (s) | 0 | 120 | 240 | 360 | 480 |
|---|---|---|---|---|---|
| Fluid pressure (reference site) (N/m$^2$) | 400,000 | 450,000 | 500,000 | 500,000 | 300,000 |
| Flow rate (consumer site 110) (m$^3$/s) | 0.010 | 0.010 | 0.000 | 0.000 | 0.020 |
| Flow rate (consumer site 111) (m$^3$/s) | 0.020 | 0.000 | 0.000 | 0.000 | 0.000 |

As can be seen from Table 1 the fluid pressure at the reference site varies with the flow rates at the consumer sites. Table 1 also shows that the t = 240 s there is no flow with either of the consumer sites, and the concurrent fluid pressure at the reference site is 500,000 N/m$^2$. Accordingly, the reference site fluid pressure at t = 240 s is selected as the reference site fluid pressure for calibration, and the pressure sensor at consumer site 110 are calibrated according hereto as above. Likewise the pressure sensor at consumer site 111 is calibrated.

As described above the steps of reference site fluid pressure measurement, fluid pressure estimation and pressure sensor calibration is done within milliseconds or at most seconds. It may be seen from Table 1, however, that like at t = 240 s, t = 360 s represents another non-flow situation, which may as well have been used for the estimation and calibration.

Table 2 below shows another representation of the flow rate and pressure data of Fig. 2.

Table 2

| Time (s) | 0 | 120 | 240 | 360 | 480 |
|---|---|---|---|---|---|
| Fluid pressure (reference site) (N/m$^2$) | 400,000 | 450,000 | 500,000 | 500,000 | 300,000 |
| Flow rate (consumer site 110) (m$^3$/s) | 0.010 | 0.010 | 0.000 | 0.000 | 0.020 |
| Flow rate (consumer site 111) (m$^3$/s) | 0.020 | 0.000 | 0.000 | 0.000 | 0.000 |
| Fluid pressure (consumer site 110) (N/m$^2$) | 270,000 | 280,000 | 300,000 | 300,000 | 220,000 |
| Fluid pressure (consumer site 111) (N/m$^2$) | 220,000 | 240,000 | 250,000 | 250,000 | 230,000 |

As can be seen from Table 2, at t = 240 s, the fluid pressure indication at consumer site 110 was 300,000 N/m$^2$. Calibrating at this time, the pressure sensor 130 at consumer site 110 is calibrated to 303,920 N/m$^2$ in substitution of the said 300,000 N/m$^2$.

Based on the data of Table 2, the calibration may as well be postponed until t = 480 s. Assuming that the pressure sensor 130 is not drifting during the time intervals t = 240-480 s, and that any misreading is independent on the pressure level, the misreading at t = 240 s of 303,920 - 300,000 N/m$^2$ = 3,920 N/m$^2$ may be applied with the pressure indication of 220,000 N/m$^2$ at t = 480 s. Accordingly, at t = 480 s, the pressure sensor 130 is calibrated to 220,000 + 3,920 N/m$^2$ = 223,920 N/m$^2$.

Fluid pressure data for calibration may be provided from long term and/or average indications.

Thus Table 3 below shows another representation of the flow rate and pressure data of Fig. 2.

Table 3

| Time (s) | 240 | 86,640 | 173,040 | 259,440 |
|---|---|---|---|---|
| Fluid pressure (consumer site 110) (N/m$^2$) | 300,000 | 300,000 | 300,000 | 300,000 |
| Fluid pressure (consumer site 112) (N/m$^2$) | 303,840 | 303,840 | 303,840 | 303,840 |
| Fluid pressure (consumer site 113) (N/m$^2$) | 303,940 | 303,940 | 303,940 | 303,940 |
| Fluid pressure (consumer site 114) (N/m$^2$) | 303,980 | 303,980 | 303.980 | 303,980 |

With Table 3, fluid pressure data as observed with pressure sensors at of a group of four consumer sites 110, 112, 113, and 114 during a 3 days period are shown.

Each of the four consumer sites 110, 112, 113, and 114 are identical in terms of elevation and in terms of every other utility network condition as well. Accordingly, the network conditions at each of the consumer sites are identical as well, and difference in fluid pressure calibration level in terms of elevation is zero.

As can be seen from Table 3, the indications of the pressure sensor 130 at consumer site 110 are invariably lower than the indications of the pressure sensors at consumer site 112, 113, and 114, by approximately 1.3% .

Thus, prior to any calibration according to the invention, the pressure sensor 130 at consumer site 110 may be adjusted relative to the other group members. The adjustment may be made based on the average of indications of the other group members at one specific time, such as at t = 86,640 s, thus adjusting the pressure at consumer site 110 to 303,920 N/m$^2$ in substitution of 300,000 N/m$^2$.

Likewise the adjustment may be made based on the average of indications of the other group members, averaged over the time interval t = 240 - 259,440 s. In this case the fluid pressure at consumer site 110 is adjusted to 303,920 N/m$^2$ in substitution of 300,000 N/m$^2$.

Also fluid pressure data for calibration may be provided by statistical analysis.

Thus Table 4 below shows another, shorter, representation of the flow rate and pressure data of Fig. 2.

Table 4

| Time (s) | 120 | 480 |
|---|---|---|
| Fluid pressure (consumer site 110) (N/m$^2$) | 280,000 | 220,000 |
| Flow rate (consumer site 110) (m$^3$/s) | 0.010 | 0.020 |

With the data of Table 4, the fluid pressure indications of the pressure sensor at consumer site 110 are shown at two difference flow rates at this consumer site, however, none of which is a zero-flow rate.

Based on a linear regression analysis of the fluid pressure indications vs. the square of the flow rate, the fluid pressure indication at consumer site 110 at zero-flow rate is estimated to be 300,000 N/m$^2$.

Such estimated fluid pressure indication at zero-flow rate may be further calibrated according to invention, *i.e.* as above to a calibrated indication of 303,920 N/m$^2$.

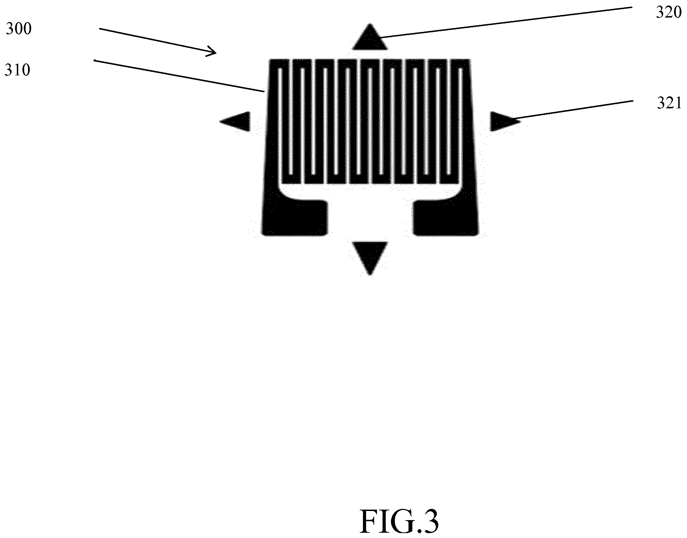

Fig. 3 shows a schematic of a strain gauge pressure sensor 300 applied with the system 100 of the present invention, applied to a flow tube of the consumption meter 120.

The strain gauge 300 has narrow lines 310 of thin metallic foil connected in series and supported on an insulating flexible backing of polymer (not shown). According to its structure the strain gauge is more sensitive, in terms of changes of its resistance, to strains in the longitudinal direction 320 of the narrow lines 310 than to strains in the direction perpendicular 321 thereto.

Although the present invention has been described in connection with the specified embodiments, it should not be construed as being in any way limited to the presented examples. The invention can be implemented by any suitable means; and the scope of the present invention is to be interpreted in the light of the accompanying claim set.

**Claims**

1. A system (100) for calibrating consumption-meter-integrated pressure sensors (130, 131) in a utility network (101), the system (100) comprising:

   - a plurality of consumption meters (120, 121) arranged for measuring a flow rate of the utility at a plurality of consumption sites (110, 111) in the utility network, each of the consumption meters comprising:

      - a pressure sensor (130, 131) arranged to measure a fluid pressure (170, 171) of the utility at the consumer site (110, 111) in the utility network and having calibration means for calibration of the pressure sensor (130, 131) based on received calibration data (260, 261), and
      - two-way wireless radio frequency communication means configured to communicate data (150, 151) representing the flow rate at the consumer site and data (170, 171) representing the fluid pressure at the consumer site and to receive calibration data (260, 261);

   - a reference pressure sensor (200) arranged at a reference site (210) in the utility network (101), the reference pressure sensor (200) being arranged to measure the fluid pressure at the reference site under non-flow conditions in the utility network (210) and having communication means (220) for communicating data (230) representing the fluid pressure at the reference site (210);
   - first and second registration means (180, 240) for registration of the elevation at each consumer site and at the reference site (210), respectively and for communicating such data (190, 191, 241) representing such consumer site and reference site elevation;

   wherein the system further comprises:

   - a data collector (250) arranged to receive all of said data (150, 151, 170, 171) representing the flow rate at the consumer sites and the fluid pressure at the consumer sites from each of the consumption meters, the data (230) representing the fluid pressure at the reference site, as well as the data (190, 191, 241) representing the consumer site elevation and the reference site elevation, and for communicating calibration data (260, 261) to each of the consumption meters (120, 121) for calibrating the pressure sensors (130, 131); and
   - a computing unit (251) connected to the data collector, the computing unit being arranged to estimate the calibration data (260, 261) for being communicated to each of the consumption meters (120, 121) by:

      - grouping data sets of simultaneous data representing the fluid pressure at the reference site and flow rates at each of the consumer sites,
      - identify from such data sets a non-flow data set of non-flow at each of the consumer sites, and
      - apply the fluid pressure at the reference site of such non-flow data set for estimating the fluid pressure at the consumer site based on a calculated elevation difference between the reference site and the consumer site.

2. The system according to claim 1, wherein the consumption meter comprises a flow tube and wherein the pressure sensor is arranged with the flow tube for sensing deformations of the flow tube.

3. The system according to claim 2, wherein the pressure sensor comprises a strain gauge arranged at an outer surface of the flow tube of the consumption meter.

4. The system according to claim 2, wherein the pressure sensor comprises an optical sensor or a capacitive sensor.

5. The system according to any of the preceding claims, wherein the first registration means are integrated with the two-way wireless radio frequency communication means of the consumption meter.

6. The system according to any of the preceding claims, wherein estimating the fluid pressure the consumer site is further made from a parameter selected from the group of network pipe parameters comprising pipe shape, such as pipe dimensions, such as pipe length and pipe diameter, pipe bends, and pipe inner surface roughness, and pipe constituents such as valves, filters, and meters for a piece of pipe of the utility network between the reference site and the consumer site, and the fluid viscosity.

7.  The system according to any of the preceding claims, wherein the plurality of consumer sites covers 10% or more of all consumer sites in the utility network, such a more than 20%, such as more than 30%, such as more than 40%, such as more than 50% of all consumer sites in the utility network.

8.  The system according to any of the preceding claims, wherein the computing unit (251) is further arranged to:

    - estimate a hydraulic coefficient for a part of the utility network between a first consumer site and a second consumer site selected from the plurality of consumer sites, from the fluid pressure obtained from the pressure sensor at the first consumer site and from the fluid pressure obtained from the pressure sensor at the second consumer site.

9.  The system according to claim 8, wherein the computing unit is further arranged to:

    - estimate a hydraulic coefficient for the part of the utility network between the first consumer site and the second consumer site from simultaneous values of the fluid pressure at the first consumer site and a first flow rate obtained from a first consumption meter at the first consumer site, and simultaneous values of the fluid pressure at the second consumer site and a flow rate obtained from a second consumption meter at the second consumer site.

10. A method of calibrating pressure sensors (130, 131) in a utility network (101) with a plurality of consumer sites (110, 111) each comprising a consumption meter (120, 121) comprising an integrated pressure sensor (130, 131) having calibration means and wherein each consumption meter further comprises two-way wireless communication means to communicate data (150, 151) representing the flow rate at the consumer site and data (170, 171) representing the fluid pressure at the consumer site and for receiving calibration data (260, 261), the method comprising:

    - registering, by a first registration means (180), the elevation at each consumer site (110, 111) and communicating data (190, 191) representing such consumer site elevation to a data collector (250);
    - measuring a flow rate and a fluid pressure of the utility at the consumer site and communicating data (150, 151, 170, 171) representing the flow rate and the fluid pressure at the consumer site (110, 111) to the data collector (250);
    - measuring, by means of a reference pressure sensor (200) arranged at a reference site (210) in the utility network and having communication means (220), the fluid pressure at the reference site under non-flow conditions in the utility network and communicating, by said communication means (220), data (230) representing the fluid pressure at the reference site (210) to the data collector (250);
    - registering, by a second registration means (240), the elevation at the reference site (210) and communicating data representing such reference site elevation to the data collector (250);
    - calculating, for each consumer site (110,111), by a computing unit (251) connected to the data collector (250), the elevation difference between the reference site (210) and the consumer site (110, 111) ;
    - estimating, for each consumer site (110, 111), by the computing unit (251), the fluid pressure at the consumer site by:

        - grouping data sets of simultaneous data representing the fluid pressure (230) at the reference site (210) and flow rates (150, 151) at each of the consumer sites (110, 111),
        - identify from such data sets a non-flow data set of non-flow at each of the consumer sites, and
        - apply the fluid pressure at the reference site (210) of such non-flow data set for estimating the fluid pressure at the consumer site (110, 111) based on the calculated elevation difference between the reference site and the consumer site;

    - providing, for each consumer site (110, 111), by the computing unit (251), calibration data (260, 261) based on such estimated fluid pressure to the data collector (250);
    - communicating, for each consumer site (110, 111), by the data collector (250), the calibration data (260, 261) to the pressure sensors (130, 131); and calibrating the pressure sensors based on such calibration data.

EP 3 184 984 B1

**Patentansprüche**

1. System (100) zur Kalibrierung von in einem Verbrauchsmesser integrierten Drucksensoren (130, 131) in einem Versorgungsnetzwerk (101), wobei das System (100) Folgendes umfasst:

   - eine Vielzahl von Verbrauchsmessern (120, 121), angeordnet zum Messen einer Durchflussrate des Versorgungsgutes an einer Vielzahl von Verbrauchsstellen (110, 111) in dem Versorgungsnetzwerk, wobei jeder der Verbrauchsmesser Folgendes umfasst:

      - einen Drucksensor (130, 131), der dazu angeordnet ist, einen Fluiddruck (170, 171) des Versorgungsgutes an der Verbrauchsstelle (110, 111) in dem Versorgungsnetzwerk zu messen, und mit Kalibrierungsmitteln zur Kalibrierung des Drucksensors (130, 131) auf Grundlage von empfangenen Kalibrierungsdaten (260, 261), und
      - drahtlose Zwei-Wege-Funkfrequenz-Kommunikationsmittel, die dazu konfiguriert sind, Daten (150, 151), die die Durchflussrate an der Verbrauchsstelle darstellen, und Daten (170, 171), die den Fluiddruck an der Verbrauchsstelle darstellen, zu kommunizieren und Kalibrierungsdaten (260, 261) zu empfangen;

   - einen Referenzdrucksensor (200), der an einer Referenzstelle (210) in dem Versorgungsnetzwerk (101) angeordnet ist, wobei der Referenzdrucksensor (200) dazu angeordnet ist, den Fluiddruck an der Referenzstelle unter Nichtstrombedingungen in dem Versorgungsnetzwerk (210) zu messen, und mit Kommunikationsmitteln (220) zum Kommunizieren von Daten (230), die den Fluiddruck an der Referenzstelle (210) darstellen;
   - ein erstes und ein zweites Registrierungsmittel (180, 240) zur Registrierung der Erhöhung an jeder Verbrauchsstelle bzw. an der Referenzstelle (210) und zum Kommunizieren von derartigen Daten (190, 191, 241), die eine derartige Erhöhung an der Verbrauchsstelle und der Referenzstelle darstellen;

   wobei das System ferner Folgendes umfasst:

   - einen Datensammler (250), der dazu angeordnet ist, alle der Daten (150, 151, 170, 171), die die Durchflussrate an den Verbrauchsstellen und den Fluiddruck an den Verbrauchsstellen von jedem der Verbrauchsmesser darstellen, wobei die Daten (230) den Fluiddruck an der Referenzstelle darstellen, sowie die Daten (190, 191, 241), die die Erhöhung an der Verbrauchsstelle und die Erhöhung an der Referenzstelle darstellen, zu empfangen, und zum Kommunizieren von Kalibrierungsdaten (260, 261) an jeden der Verbrauchsmesser (120, 121) zum Kalibrieren der Drucksensoren (130, 131); und
   - eine Recheneinheit (251), die mit dem Datensammler verbunden ist, wobei die Recheneinheit dazu angeordnet ist, die Kalibrierungsdaten (260, 261) zum Kommunizieren an jeden der Verbrauchsmesser (120, 121) durch Folgendes zu schätzen:

      - Gruppieren von Datensätzen von gleichzeitigen Daten, die den Fluiddruck an der Referenzstelle und Durchflussraten an jeder der Verbrauchsstellen darstellen,
      - Identifizieren, aus derartigen Datensätzen, eines Nichtstromdatensatzes von Nichtstrom an jeder der Verbrauchsstellen, und
      - Anwenden des Fluiddrucks an der Referenzstelle eines derartigen Nichtstromdatensatzes zum Schätzen des Fluiddrucks an der Verbrauchsstelle auf Grundlage einer berechneten Differenz der Erhöhung zwischen der Referenzstelle und der Verbrauchsstelle.

2. System nach Anspruch 1, wobei der Verbrauchsmesser ein Durchflussrohr umfasst und wobei der Drucksensor mit dem Durchflussrohr zum Erfassen von Verformungen des Durchflussrohres angeordnet ist.

3. System nach Anspruch 2, wobei der Drucksensor einen Dehnungsmesser umfasst, der an einer äußeren Fläche des Durchflussrohres des Verbrauchsmessers angeordnet ist.

4. System nach Anspruch 2, wobei der Drucksensor einen optischen Sensor oder einen kapazitiven Sensor umfasst.

5. System nach einem der vorhergehenden Ansprüche, wobei das erste Registrierungsmittel mit den drahtlosen Zwei-Wege-Funkfrequenz-Kommunikationsmitteln des Verbrauchsmessers integriert ist.

6. System nach einem der vorhergehenden Ansprüche, wobei das Schätzen des Fluiddrucks an der Verbrauchsstelle ferner auf Grundlage eines Parameters, ausgewählt aus der Gruppe von Netzwerkleitungsparametern umfassend Leitungsform, wie etwa Leitungsabmessungen, wie etwa Leitungslänge und Leitungsdurchmesser, Leitungsbiegungen und Leitungsinnenflächenrauhheit, und von Leitungsbestandteilen wie etwa Ventilen, Filtern und Messern für einen Teil von Leitung des Versorgungsnetzwerkes zwischen der Referenzstelle und der Verbrauchsstelle, und der Fluidviskosität erfolgt.

**7.** System nach einem der vorhergehenden Ansprüche, wobei die Vielzahl von Verbrauchsstellen 10 % oder mehr von allen Verbrauchsstellen in dem Versorgungsnetzwerk abdeckt, wie etwa mehr als 20 %, wie etwa mehr als 30 %, wie etwa mehr als 40 %, wie etwa mehr als 50 % aller Verbrauchsstellen in dem Verbrauchsnetzwerk.

**8.** System nach einem der vorstehenden Ansprüche, wobei die Recheneinheit (251) ferner für Folgendes angeordnet ist:

- einen Hydraulikkoeffizienten für einen Teil des Versorgungsnetzwerkes zwischen einer ersten Verbrauchsstelle und einer zweiten Verbrauchsstelle, ausgewählt aus der Vielzahl von Verbrauchsstellen, aus dem Fluiddruck, der von dem Drucksensor an der ersten Verbrauchsstelle erlangt wird, und aus dem Fluiddruck, der von dem Drucksensor an der zweiten Verbrauchsstelle erlangt wird, zu schätzen.

**9.** System nach Anspruch 8, wobei die Recheneinheit ferner für Folgendes angeordnet ist:

- einen Hydraulikkoeffizienten für den Teil des Versorgungsnetzwerkes zwischen der ersten Verbrauchsstelle und der zweiten Verbrauchsstelle aus gleichzeitigen Werten des Fluiddrucks an der ersten Verbrauchsstelle und einer ersten Durchflussrate, erlangt von einem ersten Verbrauchsmesser an der ersten Verbrauchsstelle, und gleichzeitigen Werten des Fluiddrucks an der zweiten Verbrauchsstelle und einer Durchflussrate, erlangt von einem zweiten Verbrauchsmesser an der zweiten Verbrauchsstelle, zu schätzen.

**10.** Verfahren zum Kalibrieren von Drucksensoren (130, 131) in einem Verbrauchsnetzwerk (101) mit einer Vielzahl von Verbrauchsstellen (110, 111), jeweils umfassend einen Verbrauchsmesser (120, 121) umfassend einen integrierten Drucksensor (130, 131) mit Kalibrierungsmitteln, und wobei jeder Verbrauchsmesser ferner drahtlose Zwei-Wege-Kommunikationsmittel umfasst, um Daten (150, 151), die die Durchflussrate an der Verbrauchsstelle darstellen, und Daten (170, 171), die den Fluiddruck an der Verbrauchsstelle darstellen, zu kommunizieren und zum Empfangen von Kalibrierungsdaten (260, 261), das Verfahren umfassend:

- Registrieren, durch ein erstes Registrierungsmittel (180), der Erhöhung an jeder Verbrauchsstelle (110, 111) und Kommunizieren von Daten (190, 191), die eine derartige Erhöhung an der Verbrauchsstelle darstellen, an einen Datensammler (250);
- Messen einer Durchflussrate und eines Fluiddrucks des Versorgungsgutes an der Verbrauchsstelle und Kommunizieren von Daten (150, 151, 170, 171), die die Durchflussrate und den Fluiddruck an der Verbrauchsstelle (110, 111) darstellen, an den Datensammler (250);
- Messen, mittels eines Referenzdrucksensors (200), der an einer Referenzstelle (210) in dem Versorgungsnetzwerk angeordnet ist und der Kommunikationsmittel (220) aufweist, des Fluiddrucks an der Referenzstelle unter Nichtstrombedingungen in dem Versorgungsnetzwerk und Kommunizieren, durch die Kommunikationsmittel (220), von Daten (230), die den Fluiddruck an der Referenzstelle (210) darstellen, an den Datensammler (250);
- Registrieren, durch ein zweites Registrierungsmittel (240), der Erhöhung an der Referenzstelle (210) und Kommunizieren von Daten, die eine derartige Erhöhung an der Referenzstelle darstellen, an den Datensammler (250);
- Berechnen, für jede Verbrauchsstelle (110, 111), durch eine Recheneinheit (251), die mit dem Datensammler (250) verbunden ist, der Differenz der Erhöhung zwischen der Referenzstelle (210) und der Verbrauchsstelle (110, 111);
- Schätzen, für jede Verbrauchsstelle (110, 111), durch die Recheneinheit (251), des Fluiddrucks an der Verbrauchsstelle durch:

- Gruppieren von Datensätzen von gleichzeitigen Daten, die den Fluiddruck (230) an der Referenzstelle (210) und Durchflussraten (150, 151) an jeder der Verbrauchsstellen (110, 111) darstellen,
- Identifizieren, aus derartigen Datensätzen, eines Nichtstromdatensatzes von Nichtstrom an jeder der Verbrauchsstellen, und
- Anwenden des Fluiddrucks an der Referenzstelle (210) eines derartigen Nichtstromdatensatzes zum Schätzen des Fluiddrucks an der Verbrauchsstelle (110, 111) auf Grundlage der berechneten Differenz der Erhöhung zwischen der Referenzstelle und der Verbrauchsstelle;

- Bereitstellen, für jede Verbrauchsstelle (110, 111), durch die Recheneinheit (251), von Kalibrierungsdaten (260, 261) auf Grundlage eines derartigen geschätzten Fluiddrucks an den Datensammler (250);
- Kommunizieren, für jede Verbrauchsstelle (110, 111), der Kalibrierungsdaten (260, 261) durch den Datensammler (250) an die Drucksensoren (130, 131); und Kalibrieren der Drucksensoren auf Grundlage derartiger Kalibrierungsdaten.

## Revendications

1. Système (100) destiné à étalonner des capteurs de pression (130, 131) intégrés à un compteur de consommation dans un réseau utilitaire (101), ledit système (100) comprenant :

   - une pluralité de compteurs de consommation (120, 121) agencés pour mesurer un débit de l'utilité au niveau d'une pluralité de sites de consommation (110, 111) dans le réseau utilitaire, chacun des compteurs de consommation comprenant :

     - un capteur de pression (130, 131) agencé pour mesurer une pression de fluide (170, 171) de l'utilité au niveau du site consommateur (110, 111) dans le réseau utilitaire et possédant des moyens d'étalonnage destinés à l'étalonnage du capteur de pression (130, 131) sur la base des données d'étalonnage reçues (260, 261), et
     - des moyens de communication radiofréquence sans fil bidirectionnels conçus pour communiquer des données (150, 151) représentant le débit au niveau du site consommateur et des données (170, 171) représentant la pression de fluide au niveau du site consommateur et pour recevoir des données d'étalonnage (260, 261) ;

     - un capteur de pression de référence (200) agencé au niveau d'un site de référence (210) dans le réseau utilitaire (101), le capteur de pression de référence (200) étant agencé pour mesurer la pression de fluide au niveau du site de référence dans des conditions d'absence d'écoulement dans le réseau utilitaire (210) et possédant des moyens de communication (220) destinés à communiquer des données (230) représentant la pression de fluide au niveau du site de référence (210) ;
     - des premier et second moyens d'enregistrement (180, 240) destinés à enregistrer l'altitude au niveau de chaque site consommateur et au niveau du site de référence (210), respectivement, et destinés à communiquer ces données (190, 191, 241) représentant ce site consommateur et cette élévation de site de référence ;

   ledit système comprenant en outre :

     - un collecteur de données (250) agencé pour recevoir toutes lesdites données (150, 151, 170, 171) représentant le débit au niveau des sites de consommateurs et la pression de fluide au niveau des sites de consommateurs à partir de chacun des compteurs de consommation, les données (230) représentant la pression de fluide au niveau du site de référence, ainsi que les données (190, 191, 241) représentant l'élévation de site consommateur et l'élévation de site de référence, et pour communiquer des données d'étalonnage (260, 261) à chacun des compteurs de consommation (120, 121) pour étalonner les capteurs de pression (130, 131) ; et
     - une unité de calcul (251) connectée au collecteur de données, l'unité de calcul étant agencée pour estimer les données d'étalonnage (260, 261) destinées à être communiquées à chacun des compteurs de consommation (120, 121) en :

       - groupant des ensembles de données contenant des données simultanées représentant la pression de fluide au niveau du site de référence et des débits au niveau de chacun des sites consommateurs,
       - identifiant, à partir de ces ensembles de données, un ensemble de données sans écoulement en l'absence d'écoulement au niveau de chacun des sites consommateurs, et
       - en appliquant la pression de fluide au niveau du site de référence de cet ensemble de données sans écoulement pour estimer la pression de fluide au niveau du site consommateur sur la base d'une différence d'altitude calculée entre le site de référence et le site consommateur.

2. Système selon la revendication 1, ledit compteur de consommation comprenant un tube d'écoulement et ledit capteur de pression étant agencé avec le tube d'écoulement en vue de la détection des déformations du tube d'écoulement.

3. Système selon la revendication 2, ledit capteur de pression comprenant une jauge de contrainte agencée au niveau d'une surface externe du tube d'écoulement du compteur de consommation.

4. Système selon la revendication 2, ledit capteur de pression comprenant un capteur optique ou un capteur capacitif.

5. Système selon l'une quelconque des revendications précédentes, lesdits premiers moyens d'enregistrement étant intégrés aux moyens de communication radiofréquence sans fil bidirectionnels du compteur de consommation.

6. Système selon l'une quelconque des revendications précédentes, ladite estimation de la pression de fluide du site consommateur étant en outre réalisée à partir d'un paramètre sélectionné parmi le groupe de paramètres de conduit de réseau comprenant la forme du conduit, telle que les dimensions du conduit, telles que la longueur et le diamètre du conduit, les courbes de conduit, la rugosité de surface interne de conduit et les constituants de conduit tels que des soupapes, des filtres et des compteurs pour un tronçon de conduit du réseau utilitaire entre le site de référence et le site consommateur, et la viscosité de fluide.

7. Système selon l'une quelconque des revendications précédentes, ladite pluralité de sites consommateurs couvrant 10 % ou plus de tous les sites consommateurs dans le réseau utilitaire, telle que plus de 20 %, telle que plus de 30 %, telle que plus de 40 %, telle que plus de 50 % de tous les sites consommateurs dans le réseau utilitaire.

8. Système selon l'une quelconque des revendications précédentes, ladite unité de calcul (251) étant en outre agencée pour :

   - estimer un coefficient hydraulique pour une partie du réseau utilitaire compris entre un premier site consommateur et un second site consommateur choisi parmi la pluralité de sites consommateurs, à partir de la pression de fluide obtenue du capteur de pression niveau du premier site consommateur et à partir de la pression de fluide obtenue du capteur de pression au niveau du second site consommateur.

9. Système selon la revendication 8, ladite unité de calcul étant en outre agencée pour :

   - estimer un coefficient hydraulique pour la partie du réseau utilitaire compris entre le premier site consommateur et le second site consommateur à partir des valeurs simultanées de la pression de fluide au niveau du premier site consommateur et d'un premier débit obtenu à partir d'un premier compteur de consommation au niveau du premier site consommateur et des valeurs simultanées de la pression de fluide au niveau du second site consommateur et d'un débit obtenu à partir d'un second compteur de consommation au niveau du second site consommateur.

10. Procédé d'étalonnage de capteurs de pression (130, 131) dans un réseau utilitaire (101) avec une pluralité de sites consommateurs (110, 111) comprenant chacun un compteur de consommation (120, 121) comprenant un capteur de pression intégré (130, 131) possédant des moyens d'étalonnage et chaque compteur de consommation comprenant en outre des moyens de communication sans fil bidirectionnels pour communiquer des données (150, 151) représentant le débit au niveau du site consommateur et des données (170, 171) représentant la pression de fluide au niveau du site consommateur et pour recevoir des données d'étalonnage (260, 261), le procédé comprenant :

   - l'enregistrement, à l'aide d'un premier moyen d'enregistrement (180), de l'élévation au niveau de chaque site consommateur (110, 111) et la communication des données (190, 191) représentant cette élévation de site consommateur à un collecteur de données (250) ;
   - la mesure du débit et de la pression de fluide de l'utilitaire au niveau du site consommateur et la communication des données (150, 151, 170, 171) représentant le débit et la pression de fluide au niveau du site consommateur (110, 111) au collecteur de données (250) ;
   - la mesure, au moyen d'un capteur de pression de référence (200) agencé au niveau d'un site de référence (210) dans le réseau utilitaire et possédant des moyens de communication (220), de la pression de fluide au niveau du site de référence dans des conditions d'absence d'écoulement dans le réseau utilitaire et la communication, à l'aide desdits moyens de communication (220), des données (230) représentant la pression de fluide au niveau du site de référence (210) au collecteur de données (250) ;
   - l'enregistrement, à l'aide d'un second moyen d'enregistrement (240), de l'altitude au niveau du site de référence (210) et la communication des données représentant cette élévation de site de référence au collecteur de données (250) ;
   - le calcul, pour chaque site consommateur (110, 111), à l'aide d'une unité de calcul (251) connectée au collecteur de données (250), de la différence d'altitude entre le site de référence (210) et le site consommateur (110, 111) ;
- l'estimation, pour chaque site consommateur (110, 111), à l'aide de l'unité de calcul (251), de la pression de fluide au niveau du site consommateur, en :

    - groupant des ensembles de données contenant des données simultanées représentant la pression de fluide (230) au niveau du site de référence (210) et des débits (150, 151) au niveau de chacun des sites consommateurs (110, 111),
    - identifiant, à partir de ces ensembles de données, un ensemble de données sans écoulement en l'absence d'écoulement au niveau de chacun des sites consommateurs, et
    - en appliquant la pression de fluide au niveau du site de référence (210) de cet ensemble de données sans écoulement pour estimer la pression de fluide au niveau du site consommateur (110, 111) sur la base de la différence d'altitude calculée entre le site de référence et le site consommateur ;

- fournissant, pour chaque site consommateur (110, 111), à l'aide de l'unité de calcul (251), des données d'étalonnage (260, 261) sur la base de cette pression de fluide estimée au collecteur de données (250) ;
- communiquant, pour chaque site consommateur (110, 111), à l'aide du collecteur de données (250), des données d'étalonnage (260, 261) aux capteurs de pression (130, 131) ; et l'étalonnage des capteurs de pression sur la base de ces données d'étalonnage.

System 100

Utility Network 101

Data Collector 250

**Consumer site 110**

| Consumption meter 120 | Communication means 140 |

| Pressure sensor130 | Communication means 160 |

Flow Rate Data 150 →

Fluid Pressure Data 170 →
← Calibration Data 260

**Consumer site 111**

| Consumption meter 121 | Communication means 141 |

| Pressure sensor 131 | Communication means 161 |

Flow Rate Data 151 →

Fluid Pressure Data 171 →
← Calibration Data 261

Consumer Site Registration Means 180

Reference Site Registration Means 240

Consumer Site Elevation Data 190, 191 →

Reference Site Elevation Data 241 →

**Reference site 210**

| Ref. Pressure Sensor 200 | Communication means 220 |

Reference Site Pressure Data 230 →

Computing Unit 251

← ←

← ←

→ →

→ →

→ →

FIG.1

Elevation Level

Consumer Site Elevation: 50.00 m →

Elevation Difference: 20.00 m

Reference Site Elevation: 30.00 m ←

Reference Site Pressure Measurement: 500,000 N/m2

Consumer site 110

Consumption meter 120 | Communication means 140

Pressure sensor 130 | Communication means 170

Consumer Site Pressure Estimate: 303,920 N/m2

Reference site 210

Ref. Pressure Sensor 200 | Communication means 220

FIG.2

EP 3 184 984 B1

FIG.3

**EP 3 184 984 B1**

## REFERENCES CITED IN THE DESCRIPTION

### Patent documents cited in the description

- JP 2012245207 B